# EUROPEAN PATENT SPECIFICATION

(11) **EP 0 572 964 B1**
(45) Date of publication and mention of the grant of the patent: **09.10.1996**
(21) Application number: 93108753.0
(22) Date of filing: 01.06.1993
(51) Int. Cl.: A01B 63/111, A01B 63/114, G05B 19/10

(54) **A method for the electronic control of a hydraulic hoist for agricultural tractors**
Verfahren zur elektronischen Steuerung eines hydraulischen Hebers für landwirtschaftliche Schlepper
Méthode de contrôle électronique d'un élévateur hydraulique pour tracteurs agricoles

(30) Priority: 03.06.1992 IT TO920476
(43) Date of publication of application: 08.12.1993
(73) Proprietor: SAME S.p.A., I-24047 Treviglio (Bergamo) (IT)
(72) Inventor: Todeschini, Eugenio, I-24100 Bergamo (IT)
(74) Representative: Marchitelli, Mauro

(56) References cited:
- EP-A- 0 167 681
- CA-A- 1 246 719
- GB-A- 2 093 676
- AUTOMATISIERUNGSTECHNISCHE PRAXIS - ATP no. 8, 31 August 1989, MUNCHEN DE pages
- 367 - 373 K NIG &OHLISCHLAGER 'Ein "intelligenter" elektropneumatischer Stellungsregler'
- OLHYDRAULIK UND PNEUMATIK no. 11, 1 November 1991, MAINZ DE pages 828 - 835 HESSE 'Digitale elektronische Hubwerksregelung f r Ackerschlepper'

## Description

The present invention relates to methods and systems for the control of hydraulic hoists and particularly the hydraulic hoists fitted on agricultural tractors. These devices are used to support implements, for example, ploughs used in agricultural operations. Typically, they are fitted to the rear portion of the agricultural tractor, but sometimes also to the front portion.

Such methods include the steps of detecting an operative parameter, generating signals indicative of the operative parameter detected, and controlling the hoist by means of the signals, the operative parameter being representative of the stress on the implement, of its position or, of the slippage of the tractor, possibly in combination with the stress on the implement.

In recent years, hydraulic hoists mounted on agricultural tractors have undergone considerable improvements with the use of both analogue and digital electronic control systems. The object of the present invention is further to improve the methods of controlling hydraulic hoists and their control systems. The present invention improves the method of controlling the hydraulic hoist both during the stage in which the operative parameter set by the driver is monitored and during the stage in which the implement penetrates the soil, upon completion of which the point is reached when the operative parameter is monitored, thus also improving the dialogue between the driver of the agricultural tractor and the control system.

In the current state of the art, electronic systems for controlling hydraulic hoists can monitor the stress on the implement, the position of the implement, or a combination of the stress on the implement and the slippage of the tractor relative to the ground. The monitoring of the stress on the implement and the position of the implement may possibly be combined so that the system performs its control function in relation to a mixture of the two signals. Such systems, comprising the features of the preambles of claim 1 and 7, are known from EP-A-0 167 681 and GB-A-2 093 676.

This method does not prevent the implement from penetrating the soil to a depth which is greater than that required and, in some circumstances, is damaging, if softer ground conditions are unexpectedly encountered when stress-monitoring or stress-plus-slippage monitoring has been set.

It is easy to understand how useful it would be, for example, to be able to prevent the implement from descending below the depth corresponding to the stress selected, should softer ground conditions be encountered. The greater depth of penetration would result in a useless waste of energy and of fertilisers and chemicals which would affect a layer of soil from which they would not be taken up by the crops and these substances would thus be spread in the soil ineffectively. A similar situation occurs when the machine is faced with conditions of excessive stress, when the position has been set as the control parameter and harder soil conditions are unexpectedly encountered.

Clearly, therefore, the current methods of controlling hydraulic hoists have technical disadvantages when the ground conditions encountered by the machine are not homogeneous. Furthermore, such conditions of non-homogeneity are often encountered in the course of agricultural operations.

The object of the present invention is to solve the aforementioned problems which may be encountered with methods of the prior art. According to the present invention, this object is achieved by virtue of a method of controlling hydraulic hoists, which consists of selecting one of the operative parameters as the main control parameter and selecting at least one of the other operative parameters as a secondary control parameter which can take over from the main control parameter when the detected value of the second parameter exceeds a predetermined threshold value.

According to another aspect of the invention, it is possible to improve the stage in which the hydraulic hoist brings the implement into the automatic control mode at the beginning of a furrow or of a run by the tractor. In fact, for the reasons set out above, it is desirable for the implement to penetrate the ground within the shortest possible distance. In order to minimise this distance, the implement may conveniently be made to penetrate the ground with the hydraulic cylinder operating the hydraulic hoist under floating-control conditions. This facilitates the penetration of the implement and reduces the stretch of ground in which the implement is at a lesser depth than that set by the driver. This operation is normally carried out by the operation of the hydraulic distributor by means of the floating-control lever or a similar, hand-operated device, which requires the intervention of the driver. It is desirable, however, for this operation to take place automatically, since the driver has to control other aspects of the operation.

For this reason, the method of the present invention also includes the step of detecting the condition in which the lowering speed of the hoist becomes zero in order to generate an electrical signal indicative of that condition, in order automatically to set the floating-control condition and to maintain the floating-control condition until the main control parameter detected reaches a preset value.

A further disadvantage of the prior art, again connected with the need to optimise the control of the operation of the implement during all the stages of the agricultural operation, arises during the operation of the agricultural tractor at the end of a run or the end of a furrow. In fact, it is known that, when the driver of the tractor reaches the end of a run or a furrow, he has to reverse the tractor. The driver therefore has to perform a considerable number of operations which normally start with the raising of the implement.

Current electronic systems for controlling hydraulic hoists interface with the driver by means of a control console with push-buttons and knobs. These usually include a pair of push-buttons or equivalent controls, the operation of which results in the raising and lowering of the implement. The raising and lowering of the implement typically take place whilst, and for as long as the push-button is depressed. If, instead of having to keep the push-button depressed throughout the duration of the raising operation, the driver could simply touch the push-button in order to cause the control system to carry out the whole movement, the driver could at the same time devote his attention to the other operations such as, for example, the steering and reversing of the tractor. The situation is similar when the implement is lowered.

The method of the present invention is therefore further characterised in that the lowering/raising control of the hoist can selectively be set in a first mode for displacement with travel of a variable magnitude or in a second mode for displacement by its full travel.

A further subject of the invention is a control system for carrying out the method.

The invention will now be described in detail, purely by way of non-limiting example, with reference to the appended drawings, in which:
Figure 1 is a schematic block diagram of a control system according to the present invention, and
Figures 2, 3, 4 and 5 are flow charts of steps of the method of the present invention.

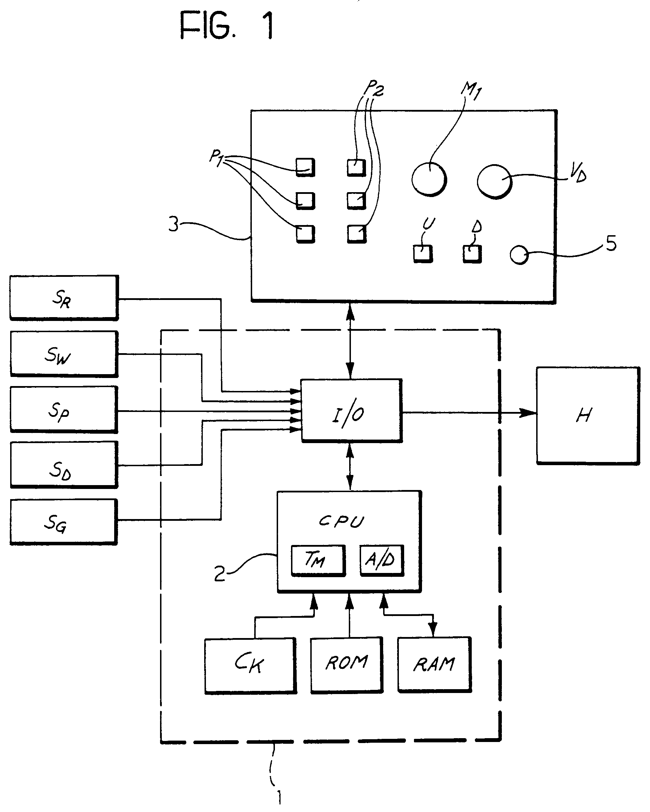

A device according to the present invention, arranged to carry out the method of the present invention, will now be described with reference to Figure 1.

The core of the device is constituted by a processing system, indicated 1, including, for example, a microprocessor or microcontroller indicated 2. The microprocessor 2 is connected to a read-only memory, indicated ROM, which contains, for example, the instructions for the algorithms corresponding to the steps of the method of the invention. Naturally, the microprocessor 2 is also connected to a random-access memory, indicated RAM, which will contain the variables used in the algorithms.

The microprocessor 2 also includes a timer, indicated Tm, which uses, for example, the signals sent to the microprocessor by an external clock, indicated Ck. As will be described below, the timer Tm is used to monitor the contact time. The microprocessor 2 also includes an analogue/digital converter, indicated A/D, which has the function of converting the parameters detected by the control system into a form processable by the microprocessor.

The parameters are detected by a plurality of sensors which are outside the processing unit 1 and communicate with the microprocessor 2 by means of a communications control device indicated I/O. The sensors are indicated Sr, Sw, Sp, Sd and Sg in the drawing.

The sensor Sr is, for example, a radar sensor for detecting the actual speed of the agricultural tractor relative to the ground. The sensor Sw is a sensor for providing a signal indicative of the speed of rotation of the wheels of the tractor and is used, together with the sensor Sr, to calculate the difference between the actual speed of the tractor and the speed of its wheels, that is, in practice, to calculate the slippage of the tractor relative to the ground.

The sensors Sp and Sb are sensors for obtaining signals indicative of the position of the implement fitted to the hoist and of the stress thereon. The sensor Sg detects the number of revolutions per minute of the drive shaft and may be used possibly to transmit additional data to the driver of the tractor.

The communications control device I/O also communicates with a console, indicated 3.

The console 3 includes two sets of push-buttons, indicated P1 and P2, which can be used by the driver to select the main control parameter and any secondary control parameters, respectively. The console includes a knob M1 for enabling the driver to set the predetermined value of the main control parameter. The console 3 also includes a knob Vd which may be used by the driver to adjust the speed at which the hoist descends during the stage before the implement contacts the ground. The console 3 also includes push-buttons U and D which are used to activate the raising and lowering controls and an indicator S which is used to indicate that the predetermined threshold value for the secondary control parameter has been exceeded.

Finally, the communications control device I/O communicates the control signals from the processing unit 1 to an actuation system indicated H.

The system H is, for example, an electrohydraulic distributor which controls a hydraulic cylinder for operating the hoist.

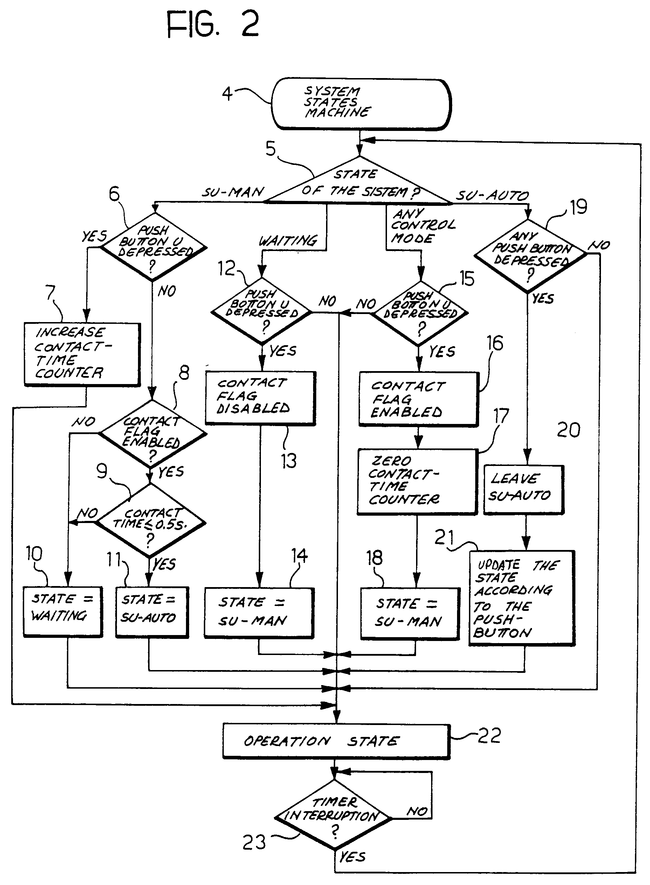

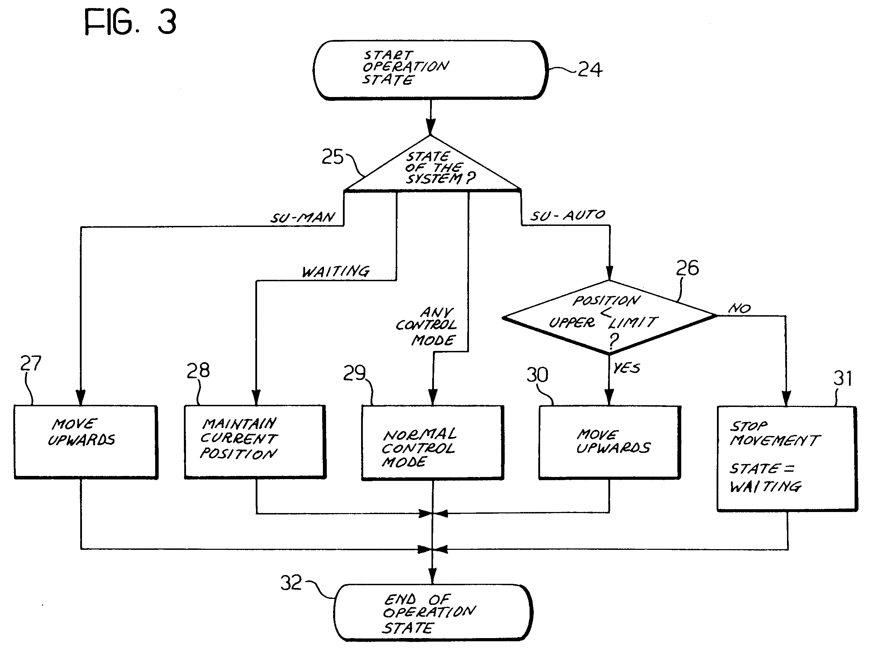

The operations and steps of the method of the present invention will now be described with reference to Figures 2 and 3, with particular reference to the states of the system since they determine the functions carried out thereby. In Figure 2 the initiation of the system is indicated 4. The switching-on of the system is followed by its initiation, during which the system is set in a WAITING state; in this state, the hydraulic hoist is stationary and the system is awaiting commands. The flow chart representing the operations carried out by the system has the form of an endless loop, shown in Figure 2.

At the beginning of the loop, at 5, the system checks the state in which it is set; the other states of the system in addition to the WAITING state already mentioned, are the SU-MAN state, which corresponds to manually-controlled raising of the hoist, the SU-AUTO state, which corresponds to the automatic raising of the hoist by its full travel, and the CONTROL MODE state which actually corresponds to several states in which the hoist is controlled automatically by the control parameter set by the driver.

If it is in the WAITING state, the system goes on to check, at 12, whether the push-button U is depressed. If the push-button U is not depressed, the system goes on to the operation state indicated 22.

The operation state actually corresponds to several different operations which are carried out alternatively according to the state in which the system is set and will be described in greater detail below with reference to Figure 3.

If, however, the push-button U is depressed, the system disables a contact flag at 13 and the system is thus set in the SU-MAN state at 14, after which it goes on to the operation state at 22.

If the system is in the SU-MAN state, the system checks, at 6, if the push-button U is depressed. If the push-button U is depressed, the system increases a contact-time counter at 7 and then goes on to the operation state. If, however, the push-button U is not depressed, the system checks, at 8, if the contact flag is enabled. If the contact flag is not enabled the system is set in the WAITING state at 10 and then goes on to the operation state. If the contact flag is enabled the system checks, at 9, if the contact time is less than half a second. If the contact time is more than half a second, the system is set in the WAITING state at 10 and then goes on to the operation state. If, however, the contact time is less than half a second, the system is set in the SU-AUTO state at 11 and then goes on to the operation state.

If the system is in the SU-AUTO state, it checks at 19 if any push-button on the control console is depressed. If no push-button is depressed, the system goes on to the operation state. If, however, a push-button is depressed, the system comes out of the SU-AUTO state at 20 and then updates the state of the system according to the push-button depressed, at 21.

In this last step, indicated 21, the system may, for example, enter a control mode which consequently involves the lowering of the hoist; this operation will be described in greater detail below.

The system then goes on to the operation state.

If the system is in the CONTROL MODE state, it checks, at 15, if the push-button U is depressed. If the push-button U is not depressed, it goes on to the operation state. If the push-button U is depressed, however, the system enables a contact flag at 16, zeroes the contact-time counter at 17, and is then set in the SU-MAN state at 18 and finally goes on to the operation state 22.

After it has executed the operation state at 22, the system waits, at 23, to receive a signal from a timer controlled by a clock. Upon receipt of the signal from the timer, the system goes back to the beginning of the loop, thus returning to the decision box indicated 5.

The operation of the system in the operation state indicated 22 in Figure 2 will now be described in greater detail.

The start of the operation state is indicated 24. As soon as the operation state has started the system checks the state in which it is set, at 25.

If it is in the SU-MAN state, the system moves the hoist upwardly at 27 after which it comes out of the operation state at 32.

If the system is in the WAITING state, the system keeps the hoist in its current position at 28 after which it comes out of the operation state.

If it is in the CONTROL MODE state, the system carries out the steps relating to the control mode at 29. These steps have already been described in the initial part of the description and will be detailed further below. The system then comes out of the operation state.

If it is in the SU-AUTO state, the system checks at 26, if the position of the hoist has exceeded the upper limit. If it has not yet exceeded the limit, the system moves the hoist upwardly, at 30, after which it comes out of the operation state. If, however, the position of the hoist has exceeded the upper limit, the system stops the movement of the hoist, at 31, and is then set in the WAITING state, after which it comes out of the operation state.

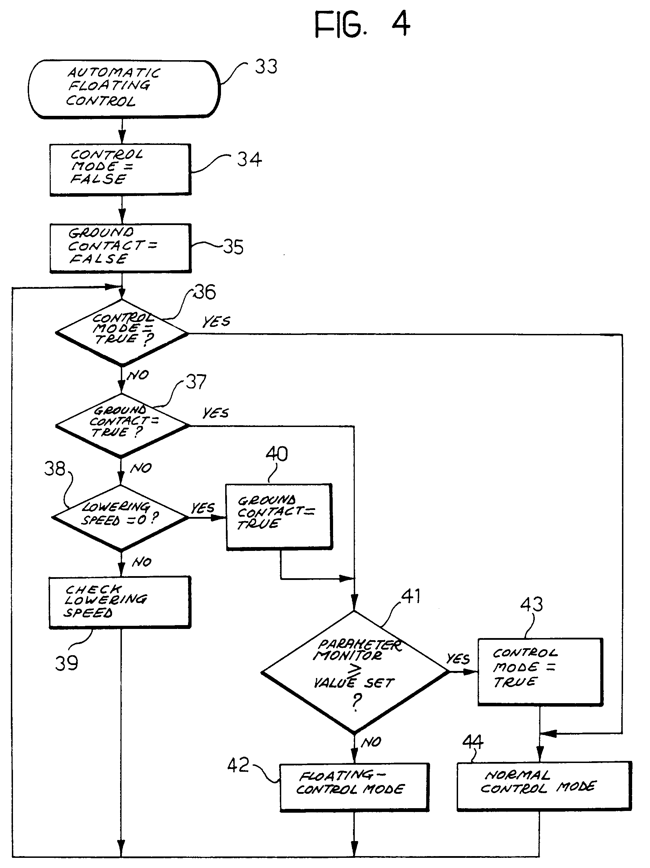

The lowering of the hoist including the automatic floating-control condition will now be described in greater detail with reference to Figure 4.

After the start of the lowering operation, indicated 33, the system sets the CONTROL MODE and GROUND CONTACT variables to "false" at 34 and 35. After this the system checks, at 36, if the CONTROL MODE variable is "true". If the CONTROL MODE variable is "true" the system goes on to the operative-parameter monitoring mode at 44. If, however, the CONTROL MODE variable is not "true", the system goes on to check if the GROUND CONTACT variable is true at 37. If the GROUND CONTACT variable is true the system goes on to check the parameter monitored at 41. If, however, the GROUND CONTACT variable is not true, the system goes on to check at 38 if the lowering speed has become zero. If the lowering speed has not become zero, the system continues to check the lowering speed at 39 and then returns to check the CONTROL MODE variable at 36. If the lowering speed has become zero, however, the system sets the GROUND CONTACT variable to true at 40.

The system then checks at 41 if the parameter monitored exceeds the value set by the driver. If the parameter monitored does not exceed the value set, the system sets the hydraulic hoist in the floating-control condition at 42 after which it returns to check the CONTROL MODE variable at 36. However if the parameter monitored is greater than or equal to the value set, the system sets the CONTROL MODE variable to true at 43. The system then performs the steps relating to the control mode at 44 and then returns to check the CONTROL MODE variable at 36.

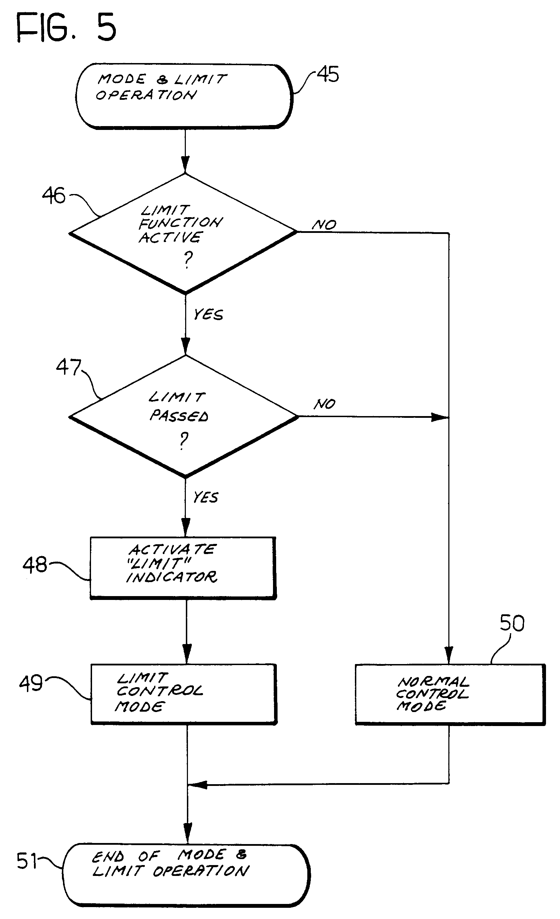

The operation relating to the control mode indicated schematically in the preceding drawings will now be described in greater detail with reference to figure 5.

The start of the control mode operation is indicated 45. The system immediately checks at 46 if the limit function is active because the driver has set a secondary control parameter.

If the limit function is not active, the system goes on to monitor the main control parameter normally at 50. It then comes out of the control mode operation.

If the limit function is active, however, the system goes on to check at 47 if the limit has been passed, that is, if one of the secondary control parameters which may have been set by the driver exceeds the predetermined threshold limit. If no limit has been passed, the system goes on to the normal control operation already described, at 50. If the limit has been passed, however, the system activates a limit indicator on the console of the system at 48 and then goes on at 49 to the mode for monitoring the secondary parameter which has exceeded the preset limit. The system then comes out of the control operation at 51.

For a better understanding of the steps of the method according to the present invention just described, an example relating to an operative situation will now follow.

It is assumed that the stress on the implement has been set as the primary control parameter in the control system of the hoist. The implement will be positioned at a certain depth B. B results from the stress set as the control parameter; if the depth is not to exceed a certain threshold value given by B plus a percentage variation X, the position parameter is set as a secondary control parameter in the control system of the hoist. The position parameter acquired is thus a limiting function; the value X, which determines the threshold value, is a function of B and may be varied by the driver.

A similar situation may occur for the slippage parameter which can be used as a secondary (limiting) control parameter alone or simultaneously with the position parameter.

Naturally, the principle of the invention remaining the same, the details of construction and forms of embodiment may be varied widely with respect to those described and illustrated, without thereby departing from the claims of the present invention.

## Claims

1. A method for the electronic control of a hydraulic hoist associated with an agricultural tractor and carrying an implement, including the steps of detecting an operative parameter, generating electrical signals indicative of the operative parameter detected, and controlling (50) the hoist by means of the electrical signals, wherein the operative parameter consists of the stress on the implement, of its position, or of the slippage of the tractor, possibly in combination with the stress on the implement, characterised in that it consists of selecting one of the operative parameters as the main control parameter and selecting at least one of the other operative parameters as a secondary control parameter which can take over (49) from the main control parameter when the detected value of the secondary parameter exceeds (47) a predetermined threshold value.

2. A method according to Claim 1, in which the hydraulic hoist includes hydraulic actuator means and associated electrohydraulic distributor means (H) which can cause the hydraulic actuator means to assume a floating-control condition (42) when the implement is brought into contact with the ground (40) during the lowering of the hoist, characterised in that it also includes the step of detecting (38, 39) the condition in which the lowering speed of the hoist becomes substantially zero in order to generate an electrical signal indicative of that condition, in order automatically to set the floating-control condition (42) and to maintain the floating-control condition until the main control parameter detected reaches a preset value (41, 43).

3. A method according to Claim 1 or Claim 2, characterized in that the lowering/raising control of the hoist can selectively be set in a first mode for displacement with travel of a variable magnitude (SU-MAN), or in a second mode for displacement (SU-AUTO) by its full travel.

4. A method according to Claim 2, characterised in that it includes the step of setting the lowering speed during a portion of the stage in which the hoist is lowered which precedes the contact of the implement carried by the hoist with the ground (40).

5. A method according to Claim 1, characterized in that it includes the step of indicating (48) that the secondary control parameter has exceeded (47) the preset threshold value.

6. A method according to Claim 3, characterized in that the setting of the lowering/raising control of the hoist in the first displacement mode (SU-MAN) or in the second displacement mode (SU-AUTO) is determined (9) by the duration of a single setting operation.

7. A device for the electronic control of a hydraulic hoist associated with an agricultural tractor and carrying an implement, including means (Sr, Sw, Sp, Sd, Sg) for detecting an operative parameter, means for generating electrical signals indicative of the operative parameter detected and an electronic unit (1) which receives the electrical input signals and is arranged to control the hoist by means of the electrical signals, in which the operative parameter consists of the stress on the implement, of its position, or of the slippage of the tractor, possibly in combination with the stress on the implement, characterised in that it includes a first selector (P1) for selecting one of the operative parameters as the main control parameter and a second selector (P2) for selecting at least one of the other operative parameters as a secondary control parameter, and in that the electronic control unit (1) is arranged to cause the secondary control parameter selected to take over (49) from the main control parameter when the detected value of the secondary control parameter exceeds (47) a predetermined threshold value.

8. A device according to Claim 7, in which the hydraulic hoist includes hydraulic actuator means and associated electrohydraulic distributor means (H) which can cause the hydraulic actuator means to assume a floating-control condition (42) when the implement is brought into contact with the ground (40) during the lowering of the hoist, characterised in that it also includes means (Sp) for detecting (38, 39) the condition in which the lowering speed of the hoist becomes substantially zero in order to generate an electrical signal indicative of that condition, the electronic unit also being arranged automatically to set the floating-control condition (42) and to maintain the floating-control condition until the main control parameter detected reaches a preset value (41, 43).

9. A device according to Claim 7 or Claim 8, characterised in that it has electrical control means (U, D) for controlling the lowering/raising of the hoist, which are operable selectively in a first mode (SU-MAN), in which the electronic unit (1) is arranged to cause a displacement (27) of the hoist with travel of a variable magnitude, or in a second mode (SU-AUTO) in which the electronic unit is arranged to cause a displacement (30) of the hoist by its full travel (26).

10. A device according to Claim 7 and Claim 8, characterised in that it includes means (Vd) for setting the lowering speed during a portion of the stage in which the hoist is lowered which precedes the contact of the implement supported by the hoist with the ground.

11. A device according to Claim 7, characterised in that it includes means (S) for indicating that the secondary control parameter has exceeded the preset threshold value.

12. A device according to Claim 9, characterised in that the operation of the electrical control means (U, D) in the first mode (SU-MAN) or in the second mode (SU-AUTO) is determined by the duration of a single operation of the control means (U, D).

## Patentansprüche

1. Verfahren zur elektronischen Regelung eines hydraulischen Hebezeugs, das mit einem landwirtschaftlichen Traktor verbunden ist und ein Werkzeug trägt, mit den Schritten, einen Betriebsparameter zu detektieren, elektrische Signale zu erzeugen, welche kennzeichnend für den detektierten Betriebsparameter sind, und das Hebezeug mit Hilfe der elektrischen Signale zu regeln (50), wobei der Betriebsparameter durch den Streß des Werkzeuges, dessen Position oder den Schlupf des Traktors, eventuell in Kombination mit dem Streß des Werkzeuges, gegeben ist, dadurch gekennzeichnet, daß es dann besteht, einen der Betriebsparameter als den Hauptregelparameter auszuwählen und zumindest einen der anderen Betriebsparameter als einen sekundären Regelparameter auszuwählen, der an die Stelle des Hauptregelparameters tritt (49), wenn der detektierte Wert des sekundären Regelparameters einen vorherbestimmten Schwellenwert überschreitet (47).

2. Verfahren nach Anspruch 1, wobei das hydraulische Hebezeug hydraulische Betätigungsmittel und zugeordnete elektrohydraulische Verteilermittel (H) umfaßt, welche bewirken können, daß die hydraulischen Betätigungsmittel einen astatischen Regelzustand (42) annehmen, wenn das Werkzeug während des Absenkens des Hebezeugs in Kontakt mit dem Boden gebracht worden ist, dadurch gekennzeichnet, daß es zudem den Schritt umfaßt, den Zustand zu erfassen (38, 39), in dem die Absenkgeschwindigkeit des Hebezeuges im wesentlichen null wird, um ein elektrisches Signal zu erzeugen, das für diesen Zustand kennzeichnend ist, um automatisch den astatischen Regelzustand zu setzen (42) und den astatischen Regelzustand beizubehalten, bis der detektierte Hauptregelparameter einen vorgegebenen Wert erreicht (41, 43).

3. Verfahren nach Anspruch 1 oder Anspruch 2, dadurch gekennzeichnet, daß die Absenk/Anheberegelung des Hebezeugs wahlweise in einen ersten Modus zur Verschiebung um einen Weg variabler Größe (SU-MAN) oder in einen zweiten Modus zur Verschiebung (SU-AUTO) um den vollen Weg gesetzt werden kann.

4. Verfahren nach Anspruch 2, dadurch gekennzeichnet, daß es den Schritt umfaßt, die Absenkgeschwindigkeit während eines Teils des Stadiums, in dem das Hebezeug abgesenkt wird und das dem Bodenkontakt (40) des vom Hebezeug getragenen Werkzeuges vorausgeht, einzustellen.

5. Verfahren nach Anspruch 1, dadurch gekennzeichnet, daß es den Schritt umfaßt anzuzeigen (48), daß der sekundäre Regelparameter den vorgegebenen Schwellenwert überschritten hat (47).

6. Verfahren nach Anspruch 3, dadurch gekennzeichnet, daß das Setzen der Absenk/Anheberegelung des Hebezeuges in den ersten Verschiebemodus (SU-Man) oder in den zweiten Verschiebemodus (SU-AUTO) durch die Dauer eines einzelnen Setzvorganges bestimmt ist (9).

7. Vorrichtung für die elektronische Regelung eines hydraulischen Hebezeugs, welches mit einem landwirtschaftlichen Traktor verbunden ist und das ein Werkzeug trägt, mit Mitteln (Sr, Sw, Sp, Sd, Sg) zum Detektieren eines Betriebsparameters, Mitteln zum Erzeugen elektrischer Signale, die den detektierten Betriebsparameter kennzeichnen, und einer Elektronikeinheit (1), welche die elektrischen Eingangssignale empfängt und welche vorgesehen ist, um das Hebezeug mit Hilfe der elektrischen Signale zu regeln, wobei der Betriebsparameter durch den Streß des Werkzeuges, durch seine Position oder durch den Schlupf des Traktors, eventuell in Kombination mit dem Streß des Werkzeuges, gegeben ist, dadurch gekennzeichnet, daß sie einen ersten Wahlschalter (P1), um einen der Betriebsparameter als den Hauptregelparameter auszuwählen, und einen zweiten Wahlschalter (P2), um zumindest einen der anderen Betriebsparameter als den sekundären Regelparameter auszuwählen, umfaßt, und daß die elektronische Regeleinheit (1) so ausgebildet ist, daß der gewählte sekundäre Regelparameter an die Stelle des Hauptregelparameters tritt (49), wenn der detektierte Wert des sekundären Regelparameters einen vorgegebenen Schwellenwert überschreitet (47).

8. Vorrichtung nach Anspruch 7, wobei das hydraulische Hebezeug hydraulische Betätigungsmittel und zugeordnete elektrohydraulische Verteilermittel (H) umfaßt, welche bewirken können, daß die hydraulischen Betätigungsmittel einen astatischen Regelzustand (42) annehmen, wenn das Werkzeug während des Absenkens des Hebezeuges in Kontakt mit dem Boden gebracht worden ist (40), dadurch gekennzeichnet, daß sie zudem Mittel (Sp) zum Detektieren (38, 39) des Zustandes, in dem die Absenkgeschwindigkeit des Hebezeuges im wesentlichen null wird, umfaßt, um ein elektrisches Signal zu erzeugen, das diesen Zustand kennzeichnet, und daß die Elektronikeinheit zudem so ausgebildet ist, daß sie automatisch den astatischen Regelzustand setzt (42) und den astatischen Regelzustand beibehält, bis der detektierte Hauptregelparameter einen vorgegebenen Wert erreicht (41, 43).

9. Vorrichtung nach Anspruch 7 oder Anspruch 8, dadurch gekennzeichnet, daß sie elektrische Regelmittel (U, D) zum Kontrollieren des Absenkens/Anhebens des Hebezeugs aufweist, welche wahlweise in einen ersten Modus (SU-MAN), in dem die Elektronikeinheit (1) so eingerichtet ist, daß sie eine Verschiebung des Hebezeuges um einen Weg variabler Größe bewirkt (27) oder in einem zweiten Modus (SU-AUTO), in dem die Elektronikeinheit so eingerichtet ist, daß sie eine Verschiebung (30) des Hebezeuges um seinen vollen Verschiebeweg bewirkt (26), betreibbar sind.

10. Vorrichtung nach Anspruch 7 und Anspruch 8, dadurch gekennzeichnet, daß sie Mittel (Vd) zum Einstellen der Absenkgeschwindigkeit während eines Teiles des Stadiums, in dem das Hebezeug abgesenkt wird, der dem Bodenkontakt des vom Hebezeug getragenen Werkzeuges vorausgeht, umfaßt.

11. Vorrichtung nach Anspruch 7, dadurch gekennzeichnet, daß es Mittel (S) zum Anzeigen, daß der sekundäre Regelparameter einen vorgegebenen Schwellenwert überschritten hat, umfaßt.

12. Vorrichtung nach Anspruch 9, dadurch gekennzeichnet, daß der Betrieb der elektrischen Regelmittel (U, D) im ersten Modus (SU-MAN) oder im zweiten Modus (SU-AUTO) durch die Dauer einer einzelnen Betätigung des Regelmittels (U, D) bestimmt ist.

## Revendications

1. Procédé de commande électronique d'un élévateur hydraulique associé à un tracteur agricole et portant un instrument, comprenant les étapes consistant à :
- détecter un paramètre d'exploitation,
- produire des signaux électriques représentatifs du paramètre d'exploitation détecté, et,
- commander (50) l'élévateur au moyen des signaux électriques, dans lequel le paramètre d'exploitation se compose de l'effort appliqué sur l'instrument, de sa position, ou du patinage du tracteur, éventuellement combiné avec l'effort appliqué sur l'instrument,
caractérisé en ce qu'il consiste à choisir l'un des paramètres d'exploitation en tant que paramètre de commande principale et à choisir l'un au moins des autres paramètres d'exploitation en tant que paramètre de commande secondaire qui peut prendre le relais (49) du paramètre de commande principale lorsque la valeur détectée du paramètre secondaire dépasse (47) une valeur de seuil prédéterminée.

2. Procédé selon la revendication 1, dans lequel l'élévateur hydraulique comprend un moyen d'actionnement hydraulique et un moyen (H) de distribution électrohydraulique qui est associé à celui-ci et qui peut amener le moyen d'actionnement hydraulique à prendre un état (42) de commande flottante lorsque l'instrument est mis en contact avec la terre (40) pendant l'abaissement de l'élévateur, caractérisé en ce qu'il comprend aussi l'étape consistant à détecter (38, 39) l'état dans lequel la vitesse d'abaissement de l'élévateur devient sensiblement égale à zéro pour générer un signal électrique représentatif de cet état, afin de positionner automatiquement l'état (42) de commande flottante et de maintenir l'état de commande flottante jusqu'à ce que le paramètre de commande principale détecté atteigne une valeur prédéfinie (41, 43).

3. Procédé selon la revendication 1 ou la revendication 2, caractérisé en ce que la commande d'abaissement et de relevage de l'élévateur peut être positionnée sélectivement dans un premier mode en vue d'un déplacement sur une distance d'une grandeur variable (SU-MAN), ou dans un second mode en vue d'un déplacement (SU-AUTO) correspondant à sa course complète.

4. Procédé selon la revendication 2, caractérisé en ce qu'il comprend l'étape consistant à régler la vitesse d'abaissement pendant une partie de l'étape au cours de laquelle l'élévateur est abaissé et qui précède la mise en contact de l'instrument porté par l'élévateur, avec la terre (40).

5. Procédé selon la revendication 1, caractérisé en ce qu'il comprend l'étape consistant à indiquer (48) que le paramètre de commande secondaire a dépassé (47) la valeur de seuil prédéfinie.

6. Procédé selon la revendication 3, caractérisé en ce que le positionnement de la commande d'abaissement et de relevage de l'élévateur dans le premier mode de déplacement (SU-MAN) ou dans le second mode de déplacement (SU-AUTO) est déterminée (9) par la durée d'une opération d'installation unique.

7. Dispositif pour la commande électronique d'un élévateur hydraulique associé à un tracteur agricole et portant un instrument, comprenant des moyens (Sr, Sw, Sp, Sd, Sg) pour détecter un paramètre d'exploitation, un moyen pour générer des signaux électriques repésentatifs du paramètre d'exploitation détecté, et une unité électronique (1) qui reçoit les signaux électriques d'entrée et est conçue pour commander l'élévateur au moyen des signaux électriques, dans lequels le paramètre d'exploitation se compose de l'effort appliqué sur l'instrument, de sa position, ou du patinage du tracteur, éventuellement combiné avec l'effort appliqué sur l'instrument, caractérisé en ce qu'il comprend un premier sélecteur (P1) pour choisir l'un des paramètres d'exploitation en tant que paramètre de commande principale, et un second sélecteur (P2) pour choisir l'un au moins des autres paramètres d'exploitation en tant que paramètre de commande secondaire, et en ce que l'unité de commande électronique (1) est conçue pour amener le paramètre de commande secondaire choisi à prendre le relais (49) du paramètre de commande principale lorsque la valeur détectée du paramètre de commande secondaire dépasse (47) une valeur de seuil prédéterminée.

8. Dispositif selon la revendication 7, dans lequel l'élévateur hydraulique comprend un moyen d'actionnement hydraulique et un moyen (H) de distribution électrohydraulique associé à celui-ci, qui peut amener le moyen d'actionnement hydraulique à prendre un état (42) de commande flottante lorsque l'instrument est mis en contact avec la terre (40) pendant l'abaissement de l'élévateur, caractérisé en ce qu'il comprend aussi un moyen (Sp) pour détecter (38, 39) l'état où la vitesse d'abaissement de l'élévateur devient sensiblement égale à zéro afin de générer un signal électrique représentatif de cet état, l'unité électronique étant aussi réglée automatiquement pour positionner l'état (42) de commande flottante et maintenir cet état de commande flottante jusqu'à ce que le paramètre de commande principale détecté atteigne une valeur prédéfinie (41, 43).

9. Dispositif selon la revendication 7 ou la revendication 8, caractérisé en ce qu'il comporte des moyens (U, D) de commande électrique pour commander l'abaissement et le relevage de l'élévateur, qui sont actionnables sélectivement dans un premier mode (SU-MAN), dans lequel l'unité électronique (1) est adaptée pour produire un déplacement (27) de l'élévateur sur une distance d'une grandeur variable, ou dans un second mode (SU-AUTO), dans lequel l'unité électronique est adaptée pour produire un déplacement (30) de l'élévateur, correspondant à sa course complète (26).

10. Dispositif selon la revendication 7 et la revendication 8, caractérisé en ce qu'il comprend un moyen (Vd) pour régler la vitesse d'abaissement pendant une partie de l'étape au cours de laquelle l'élévateur est abaissé et qui précède la mise en contact de l'instrument supporté par l'élévateur, avec la terre.

11. Dispositif selon la revendication 7, caractérisé en ce qu'il comprend un moyen (S) pour indiquer que le paramètre de commande secondaire a dépassé la valeur de seuil prédéfinie.

12. Dispositif selon la revendication 9, caractérisé en ce que le fonctionnement des moyens (U, D) de commande électrique dans le premier mode (SU-MAN) ou dans le second mode (SU-AUTO) est déterminé par la durée d'une opération unique des moyens de commande (U, D).
